Europäisches Patentamt

European Patent Office

Office européen des brevets

(19)

(11) Veröffentlichungsnummer: **0 117 544**
A2

# (12) EUROPÄISCHE PATENTANMELDUNG

(21) Anmeldenummer: **84101941.7**

(22) Anmeldetag: **23.02.84**

(51) Int. Cl.³: **H 04 J 3/04**

(30) Priorität: **25.02.83 DE 3306750**

(43) Veröffentlichungstag der Anmeldung: **05.09.84**
Patentblatt 84/36

(84) Benannte Vertragsstaaten: **AT BE CH DE FR GB IT LI NL SE**

(71) Anmelder: **SIEMENS AKTIENGESELLSCHAFT, Berlin und München Wittelsbacherplatz 2, D-8000 München 2 (DE)**

(72) Erfinder: **Feil, Hans Arnold, Dr.-Ing., Wadlerstrasse 20, D-8000 München 70 (DE)**

(54) Zeitmultiplexsystem.

(57) Das erfindungsgemässe Zeitmultiplexsystem bildet aus mehreren 64-kbit/s-Signalen in Multiplexern (3–6) fünf 384-kbit/s-Signale, die in einem weiteren Multiplexer (7) zu einem 2048-kbit/s-Signal gebündelt werden. Die spiegelbildlich aufgebaute Empfangsseite bewirkt mit Demultiplexern (10; 12–16) wieder die Trennung in 64-kbit/s-Signale. Durch Zusammenfassung zweier Multiplexer (2+3) oder durch Einführung einer Hierarchie-Zwischenstufe lassen sich auch 768- oder 1024-kbit/s-Signale erzeugen. Dieses Zeitmultiplexsystem erlaubt die Bildung eines Netzes mit Ausläufern, in denen beispielsweise nur fünf Sprechkanäle und ein Kanal für vermittlungstechnische Kennzeichen vorgesehen sind.

EP 0 117 544 A2

0117544

SIEMENS AKTIENGESELLSCHAFT        Unser Zeichen
Berlin und München               VPA 83 P 1103 E

**Zeitmultiplexsystem**

Die Erfindung bezieht sich auf ein Zeitmultiplexsystem, bei dem sendeseitig mehrere 64-kbit/s-Signale oder aus Analogsignalen umgesetzte 64-kbit/s-Signale zu einem 2048-kbit/s-Signal gebündelt und empfangsseitig wieder getrennt werden.

Derartige Bündelungen und Trennungen von Datensignalen realisiert ein in der Siemens-Druckschrift "Nachrichten-Übertragungseinrichtungen für analoge- und digitale Signale", Bestell-Nr. A 42 020 - A 131 - A 1-2-75 auf Seite 53 erwähntes Digitalsignal-Multiplexgerät DSMX 64 K/2. Eine Umwandlung von analogen Fernsprechsignalen in entsprechende digitale Signale bewirkt ein System PCMX 30 oder ein PCM-System kleinerer Kanalzahl. In einem digitalen Netz stellt die Bitrate 2048 kbit/s in der unteren Netzebene insbesondere für private Benutzer jedoch häufig noch eine zu hohe Übertragungskapazität dar.

Aufgabe der Erfindung ist es, Netzausläufer geringerer Übertragungskapazität zu realisieren.

Ausgehend von einem Zeitmultiplexsystem der einleitend geschilderten Art wird diese Aufgabe erfindungsgemäß dadurch gelöst, daß sendeseitig Multiplexer einer ersten Hierarchiestufe zur Bündelung von dreißig 64-kbit/s-Signalen zu mehreren 384- oder 384- und 768- oder 1024-kbit/s-Signalen vorgesehen sind, daß ein

Wke 1 Kom / 24.02.1983

Multiplexer einer zweiten Hierarchiestufe zur Bündelung der 384- oder 768- oder 1024-kbit/s-Signale zu dem 2048-kbit/s-Signal vorgesehen ist und daß empfangsseitig entsprechende Demultiplexer vorgesehen sind.

Eine Bitrate von 384-kbit/s ist aus der CCITT-Empfehlung G.739 an sich bekannt (COM XV-Temp. 39-E, Genf 23.11.-3.12.1980, Seiten 12 bis 21).

In Ausgestaltung der Erfindung können sendeseitig ein oder zwei Multiplexer einer Hierarchie-Zwischenstufe zur Bündelung zweier 384-kbit/s-Signale zu einem 768-kbit/s-Signal und empfangsseitig ein oder zwei Demultiplexer einer Hierarchie-Zwischenstufe zur Gewinnung zweier 384-kbit/s-Signale aus einem 768-kbit/s-Signal vorgesehen sein.

Sind die ankommenden 64-kbit/s-Signale plesiochron, dann ist es vorteilhaft, wenn in der ersten Hierarchiestufe sendeseitig Stopfeinrichtungen und empfangsseitig Entstopf- und Taktwiederherstellungseinrichtungen vorgesehen sind. Auch andere Synchronisierverfahren sind einsetzbar.

In einem 384-kbit/s-Signal können fünf Sprechsignale und ein Zusatzsignal oder ein oder zwei Tonprogrammsignale aus 15 oder 7 kHz übertragen werden.

In einem 768-kbit/s-Signal ist Platz für zehn Sprechsignale und zwei Zusatzsignale oder elf Sprechsignale und ein Zusatzsignal oder zwei oder vier Tonprogrammsignale. Zusatzsignale können vermittlungstechnische Kennzeichen sein.

Ein Bündel von jeweils fünf Sprech- oder Datensignalen bildet zusammen mit dem Zusatzsignal eine vermittlungsfähige Einheit. Der sonst für die Übertragung der vermittlungstechnischen Zeichen verwendete sechzehnte
Zeitschlitz im 2048-kbit/s-Signal steht damit für die
Übertragung anderer Informationen zur Verfügung.

Das erfindungsgemäße System kann Grundbaustein einer
größeren Systemhierarchie sein.

Anhand von Ausführungsbeispielen wird die Erfindung
nachstehend näher erläutert.

Fig. 1 zeigt ein erfindungsgemäßes Zeitmultiplexsystem
        mit seiner Sende- und Empfangsseite,

Fig. 2 zeigt die Sendeseite eines erfindungsgemäßen
        Zeitmultiplexsystems mit einer Hierarchie-
        Zwischenstufe und

Fig. 3 zeigt die Sendeseite eines erfindungsgemäßen
        Zeitmultiplexsystems mit einer abgewandelten
        ersten Hierarchiestufe.

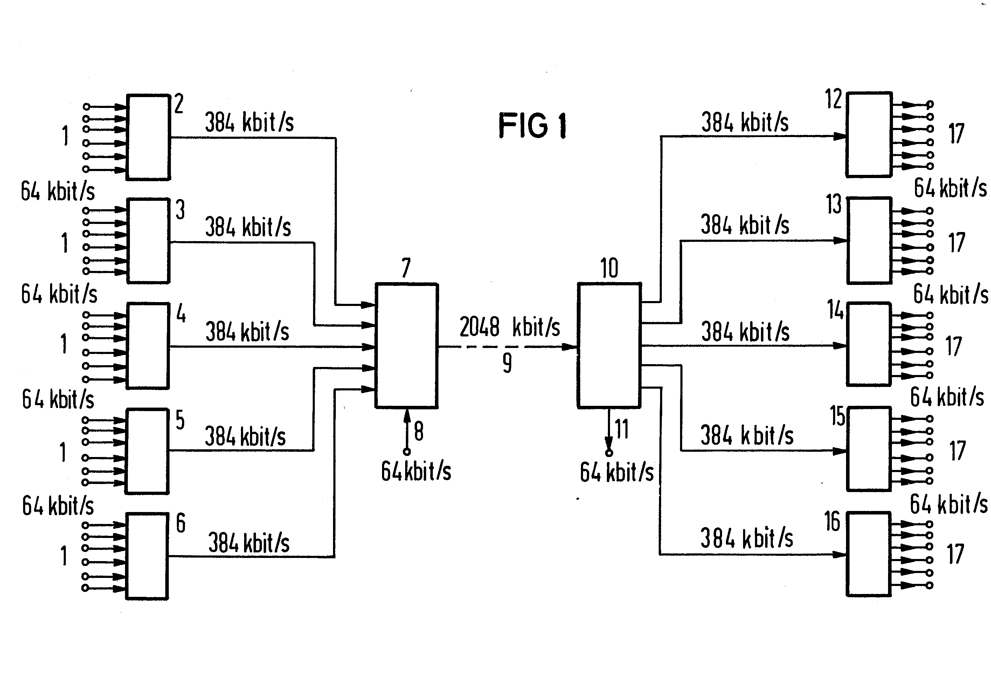

Figur 1 zeigt ein erfindungsgemäßes Zeitmultiplexsystem.
Es enthält dreißig Eingänge 1, Multiplexer 2 bis 6 und
7, eine Übertragungsstrecke 9, Demultiplexer 10, 12 bis
16 und dreißig Ausgänge 17.

An die Eingänge 1 werden 64-kbit/s-Signale angelegt
und zwar pro Multiplexer            2 bis 6 fünf
digitale Hauptsignale und ein Zusatzsignal. An den
Ausgängen der Multiplexer 2 bis 6 treten 384-kbit/s-
Signale auf, die zusammen mit einem weiteren 64-kbit/s-
Signal an dem Eingang 8 und einem intern erzeugten
64-kbit/s-Rahmenkennungswort oder Meldewort dem Multiplexer 7 zugeführt werden. Die Bündelung ergibt ein
2048-kbit/s-Signal auf der Übertragungsstrecke 9. Empfangsseitig trennt der Demultiplexer 10 das empfangene
2048-kbit/s-Signal in fünf 384-kbit/s-Signale und ein

0117544

64-kbit/s-Signal am Ausgang 11 auf. Die 384-kbit/s-
Signale werden den Demultiplexern 12 bis 16 zugeführt,
die die empfangenen Signale in dreißig 64-kbit/s-
Signale trennen.

Die 384-kbit/s-Signale führenden Leitungen können kurz
sein oder zwei verschiedene Orte verbinden.

Die Hauptsignale können aus digitalen Quellen entstandene Digitalsignale oder codierte analoge Sprech- oder
Datensignale sein.

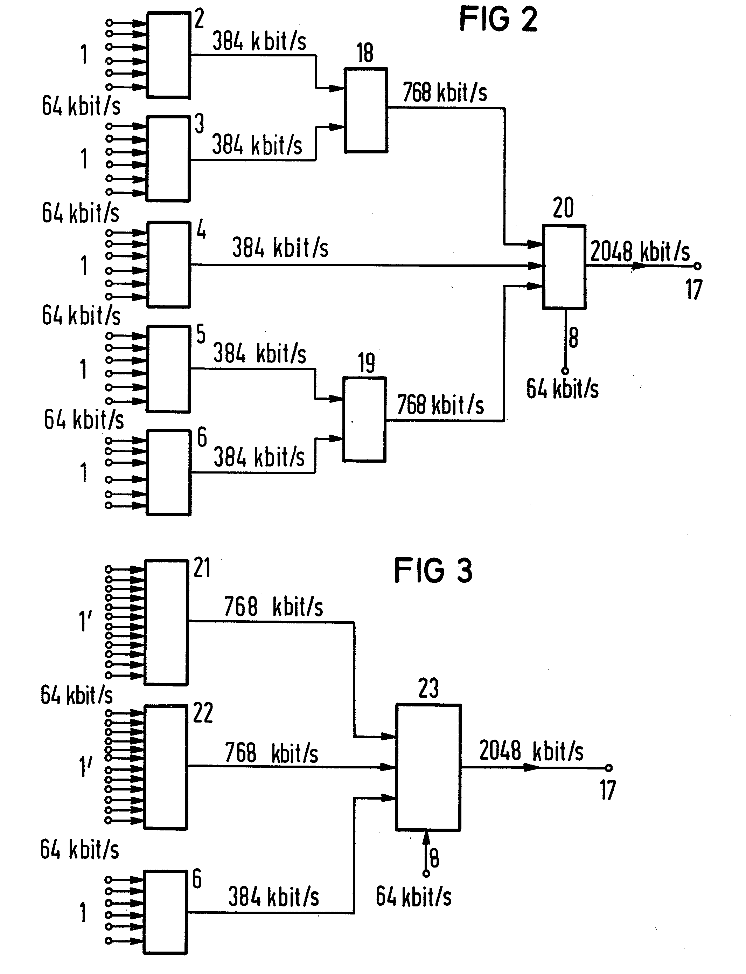

Figur 2 zeigt den sendeseitigen Teil eines erfindungsgemäßen Zeitmultiplexsystems mit einer Zwischen-Hierarchiestufe. Der Empfangsteil ist sinngemäß aufgebaut.
Die Anordnung enthält gegenüber der in Fig. 1 dargestellten Multiplexer 18 und 19,die jeweils zwei 384-
kbit/s-Signale zu einem 768-kbit/s-Signal bündelt. Ein
Multiplexer 20 hat dann zwei 768-kbit/s-Signale, ein
384-kbit/s-Signal und zwei 64-kbit/s-Signale einschließlich dem Rahmenkennungs- und Meldewort zu bündeln.

Figur 3 zeigt den Sendeteil einer weiteren Variante des
erfindungsgemäßen Zeitmultiplexsystems. Die nicht dargestellte Empfangsseite ist spiegelbildlich ausgebildet.
Ein Unterschied zur Anordnung nach Fig. 1 besteht darin,
daß in der ersten Hierarchiestufe die Multiplexer 2 bis
5 durch zwei Multiplexer 21 und 22 ersetzt sind, die
jeweils zwölf Eingänge aufweisen und 768-kbit/s-Signale
abgeben. Ein Multiplexer 23 hat dann zwei 768-kbit/s-
Signale, ein 384-kbit/s-Signal, ein 64-kbit/s-Signal
und das Rahmenkennungs- oder Meldewort zu bündeln.

12 Patentansprüche
3 Figuren

Patentansprüche

1. Zeitmultiplexsystem, bei dem sendeseitig mehrere 64-kbit/s-Signale oder aus Analogsignalen umgesetzte 64-kbit/s-Signale zu einem 2048-kbit/s-Signal gebündelt und empfangsseitig wieder getrennt werden, d a d u r c h   g e k e n n z e i c h n e t , daß sendeseitig Multiplexer (2.6; 21, 22) einer ersten Hierarchiestufe zur Bündelung von dreißig 64-kbit/s-Signalen zu mehreren 384- oder 384- und 768- oder 1024-kbit/s-Signalen vorgesehen sind, daß ein Multiplexer (7; 20; 23) einer zweiten Hierarchiestufe zur Bündelung der 384- oder 768- oder 1024-kbit/s-Signale zu dem 2048-kbit/s-Signal vorgesehen ist und daß empfangsseitig entsprechende Demultiplexer (10, 12-16) vorgesehen sind.

2. Zeitmultiplexsystem nach Anspruch 1, d a d u r c h   g e k e n n z e i c h n e t , daß sendeseitig ein oder zwei Multiplexer (18, 19) einer Hierarchiestufe zur Bündelung zweier 384-kbit/s-Signale zu einem 768-kbit/s-Signal vorgesehen sind.

3. Zeitmultiplexsystem nach Anspruch 1, d a d u r c h   g e k e n n z e i c h n e t , daß empfangsseitig ein oder zwei Demultiplexer einer Hierarchiestufe zur Gewinnung zweier 384-kbit/s-Signale aus einem 768-kbit/s-Signal vorgesehen sind.

4. Zeitmultiplexsystem nach Anspruch 1, d a d u r c h   g e k e n n z e i c h n e t , daß in der ersten Hierarchiestufe sendeseitig Stopfeinrichtungen und empfangsseitig Entstopf- und Taktwiederherstellungseinrichtungen vorgesehen sind.

0117544

5. Zeitmultiplexsystem nach Anspruch 1,
gekennzeichnet durch
die Übertragung von fünf Sprech- oder Datensignalen
und einem Zusatzsignal in einem 384-kbit/s-Signal.

6. Zeitmultiplexsystem nach Anspruch 1,
g e k e n n z e i c h n e t    d u r c h
die Übertragung eines oder zweier Tonprogrammsignale
in einem 384-kbit/s-Signal.

7. Zeitmultiplexsystem nach Anspruch 1,
g e k e n n z e i c h n e t    d u r c h
die Übertragung von zehn Sprech- oder Datensignalen
und zwei Zusatzsignalen in einem 768-kbit/s-Signal.

8. Zeitmultiplexsystem nach Anspruch 1,
g e k e n n z e i c h n e t    d u r c h
die Übertragung von elf Sprech- oder Datensignalen und
einem Zusatzsignal in einem 768-kbit/s-Signal.

9. Zeitmultiplexsystem nach Anspruch 1,
g e k e n n z e i c h n e t,    d u r c h
die Übertragung von zwei oder vier Tonprogrammsignalen
in einem 768-kbit/s-Signal.

10. Zeitmultiplexsystem nach Anspruch 5, 7 oder 8,
g e k e n n z e i c h n e t    d u r c h
die Übertragung von vermittlungstechnischen Kennzeichen
als Zusatzsignale.

FIG 1

1/2

01117544

2/2

0117544

FIG 2

FIG 3